# EUROPEAN PATENT APPLICATION

(11) **EP 1 835 302 A2**
(43) Date of publication of application: **19.09.2007**
(21) Application number: 07001179.6
(22) Date of filing: 19.01.2007
(51) Int. Cl.: G01S 7/481, G02B 26/12, G01S 17/93

(54) **Distance measuring devce and laser beam projector therefor**

(30) Priority: 15.03.2006 JP 2006071210
(71) Applicant: OMRON CORPORATION, Kyoto-shi, Kyoto 600-8530 (JP)
(72) Inventor: Shoji, Takashi Omron Corp., Shiokoji-dori Kyoto-shi Kyoto 600-8530 (JP); Fujioka, Ryoji Omron Corp., Shiokoji-dori Kyoto-shi Kyoto 600-8530 (JP)
(74) Representative: Kilian, Helmut

(57) **Abstract**

A laser beam projector has a laser light source that outputs a laser beam, a light projecting mirror for reflecting the laser beam outputted from the laser light source, a mirror driving device for oscillating the light projecting mirror so as to scan a specified area with the laser beam and piezoelectric elements attached to a back surface of the light projecting mirror. As a voltage is applied to the piezoelectric elements, the curvature of the reflecting surface of the light projecting mirror can be changed and the visibility angle of the light beam projector can be varied. A distance measuring device is formed with such a laser beam projector together with a laser beam receiver for receiving reflected waves of the laser beam from an object and a control unit for measuring the distance to the object based on the difference between the time of projecting the laser beam and the time of receiving the reflected waves by the laser beam receiver as well as the direction of the object from the direction of the projected laser beam.

## Description

### Background of the Invention

This invention relates to a laser beam projector applicable to an optical distance measuring device such as a laser beam projector applicable to a distance measuring device for monitoring obstacles in front of a vehicle or a front going vehicle.

For mounting to a vehicle to monitor the front of the vehicle while in motion for a cruising control, radar devices for scanning the front of the own vehicle with a laser beam to detect objects such as a front going vehicle are coming to be commonly used. Such a radar is provided with a distance measuring device for measuring the distance to an object detected by the projected laser beam and also detecting the direction to the detected object, the distance measuring device being provided with a laser source for outputting a laser beam, a light projecting mirror for reflecting the laser beam outputted from the laser source and a mirror driving device for causing the light projecting mirror to oscillate for scanning an area with a specified angle of vision (or angle of visibility) with the laser beam.

The angular resolution of a detected object improves if the diameter of the laser beam is made smaller. If the beam radius is reduced, however, the frequency of measurement within the same area to be scanned increases and the amount of the measurement data to be processed increases. For this reason, it is frequently the case to estimate an area where a front going vehicle is likely to be found and to treat this estimated area as the range of the scan. As a result, when the own vehicle is traveling inside a city, for example, pedestrians who are somewhat to the side in front of the vehicle may fail to be detected because the range of the scan is too narrowly limited. In order to increase the range of the scan, the diameter of the beam may be increased or the angle of oscillations by the light projecting mirror may be made larger. The former method affects the accuracy of detecting a front going vehicle adversely. As for the latter method, it tends to cause the structure of the mirror driving mechanism to become too complicated or to require a higher speed of data processing, and the method becomes too expensive to carry out.

Japanese Patent Publication Tokkai 2002-071808 disclosed a light projecting mirror having two surfaces, a diffusively reflecting mirror with a convex or concave reflecting mirror being pasted to the back of a regularly reflecting mirror with a flat reflecting surface such that either of the reflecting surfaces can be used by rotating the mirror by 180°. The accuracy in identifying an object becomes high when the regularly reflecting mirror is used because the laser beam does not spread. When the diffusively reflecting mirror is used, the accuracy in identification becomes lower because the laser beam spreads but the angle of vision becomes increased. Thus, the regularly reflecting mirror is used when the vehicle is traveling on a highway for monitoring front vehicles at far distances, and the diffusively reflecting mirror is used when the vehicle is on a city street and it is necessary to detect pedestrians and obstacles to the left and to the right in front of the vehicle. The mirror driving mechanism serves to rotate the mirror by 180° to select between the regularly and diffusively reflecting mirrors.

With the device described above, however, it takes a finite length of time to switch between the regularly and diffusively reflecting mirrors. During this time, the measurement is interrupted and the measured data cease to be continuous. It is also inconvenient to choose the diffusively reflecting mirror in the city because the accuracy of detecting a front vehicle is not high.

It is therefore an object of this invention to provide a laser beam projector capable of outputting measurement data continuously by making the curvature of the light projecting mirror variable.

### Summary of the Invention

A laser beam projector according to this invention comprises a laser light source that outputs a laser beam, a light projecting mirror for reflecting the laser beam outputted from the laser light source and a mirror driving device for oscillating the light projecting mirror and thereby scanning a specified area with the laser beam. The mirror driving device serves to scan the area at least horizontally in the left-right direction or vertically in the up-down direction by rotationally driving the light projecting mirror of a flat planar shape. The laser beam projector of this invention is characterized as having at least one piezoelectric element attached to a back surface of the light projecting mirror. If a voltage is applied to the piezoelectric element, a force is experienced by the mirror due to the piezoelectric effect. Thus, the light projecting mirror can be deformed to make its reflecting surface concave or convex by attaching piezoelectric elements at appropriate positions on its back surface so as to control the spread of the laser beam. If a voltage is applied to the piezoelectric elements in synchronism with the rotary motion of the light projecting mirror, the continuity in the spread angle of the laser beam can be maintained.

In order to efficiently deform the light projecting mirror in a convex or concave shape, it is preferable to attach a plurality of piezoelectric elements to the back surface of the light projecting mirror.

When a laser beam projector of this invention is applied to a distance measuring device mounted to a vehicle, the light projecting mirror is deformed by activating the piezoelectric elements to increase the curvature of its reflecting surface when the angle of oscillation of the light projecting mirror is nearly at its maximum. In this way, a front going vehicle can be traced and monitored with a high level of accuracy by means of a narrow laser beam when it is scanning the center area in front while a spreading beam can be used to detect pedestrians and obstacles somewhat to the left and to the right in front. The curvature of the reflecting surface may be increased as the angle of oscillation approaches the maximum value. A spreading beam is less accurate than a narrow beam but there is no problem if the purpose is to merely detect the presence of a pedestrian.

### Brief Description of the Drawings

Fig. 1 is a block diagram of a distance measuring device using a laser beam projector embodying this invention.
Fig. 2 is a diagonal view of the light projecting mirror.
Fig. 3 shows the reflection of a laser beam when the light projecting mirror is deformed.
Fig. 4 is a diagonal view of the light projecting mirror when it is deformed.
Figs. 5A and 5B show the visibility angle of the laser beam.
Fig. 6 is a flowchart for operating the mirror.
Figs. 7A, 7B and 7C show another light projecting mirror according to another embodiment of the invention.

### Detailed Description of the Invention

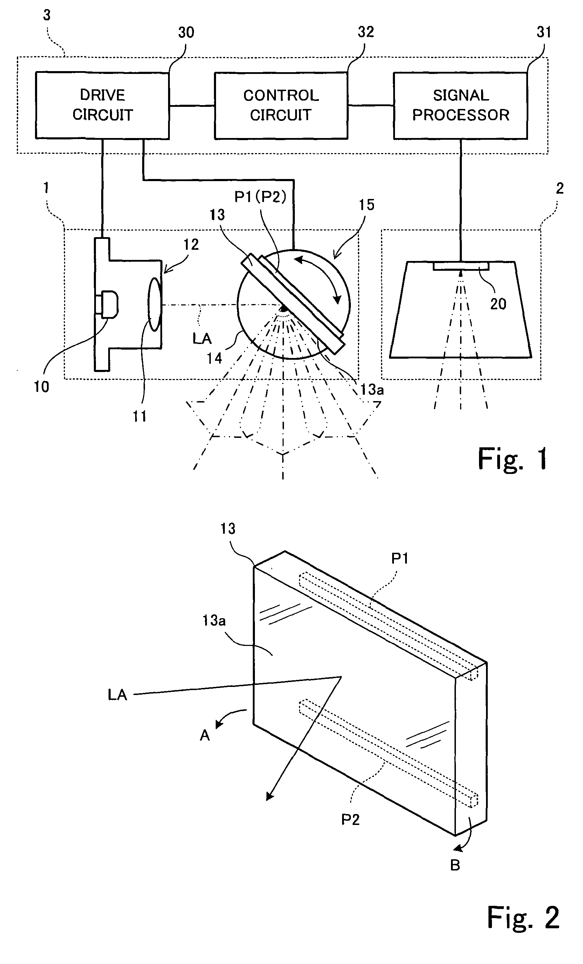

Fig. 1 is a block diagram of a distance measuring device using a laser beam projector embodying this invention. The distance measuring device mounted to a vehicle (referred to as the "own vehicle") is comprised of a laser beam projector l, a laser beam receiver 2 and a control unit 3. The control unit 3 is adapted to measure the distance to an object such as a vehicle running in front of the own vehicle based on the difference between the time of projecting a laser beam from the laser beam projector 1 and the time of receiving reflected waves by the laser beam receiver 2 and also the direction of the object from the direction of the projected laser beam. The control unit 3 is also adapted to detect the presence of a pedestrian or an obstacle on the left or right side of the front of the own vehicle. Outputs from the distance measuring device may be transmitted to a cruising control system for carrying out a speed control such that the distance to the front going vehicle will remain constant.

This laser beam projector 1 is provided with a light projecting part 12 comprising a light diode 10 (a laser light source) for emitting infrared laser light and an optical system 11 for collecting laser light with a specified widening angle outputted from this laser diode 10 and converting it into a laser beam LA having a vertically elongated sectional shape. The laser beam projector 1 is further provided with a scanning part 15 comprising a light projecting mirror 13 for reflecting the laser beam LA and thereby projecting it to the front of the device (or the vehicle) and a mirror driving device 14 for driving this light projecting mirror 13 so as to oscillate in a horizontal direction.

The light projecting mirror 13 may be produced by having a surface of an aluminum material polished into a rectangular shape. Its reflecting surface is flat and mirror-finished. As will be explained below, two piezoelectric elements P1 and P2 are provided on the back surface of the light projecting mirror 13.

The laser beam receiver 2 is provided with a light receiving element 20 and a light receiving optical system (not shown) for causing reflected light to be efficiently made incident to this light receiving element 20.

The control unit 3 is provided with a driver circuit 30 for driving the laser beam projector 1 and the mirror driving device 14, a signal processor 31 for processing light signal received by the light receiving element 20 and a control circuit 32 for measuring a distance and a direction by controlling the driver circuit 30 and the signal processor 31. The driver circuit 30 serves to drive the piezoelectric elements P1 and P2, based on signals from the control circuit 32.

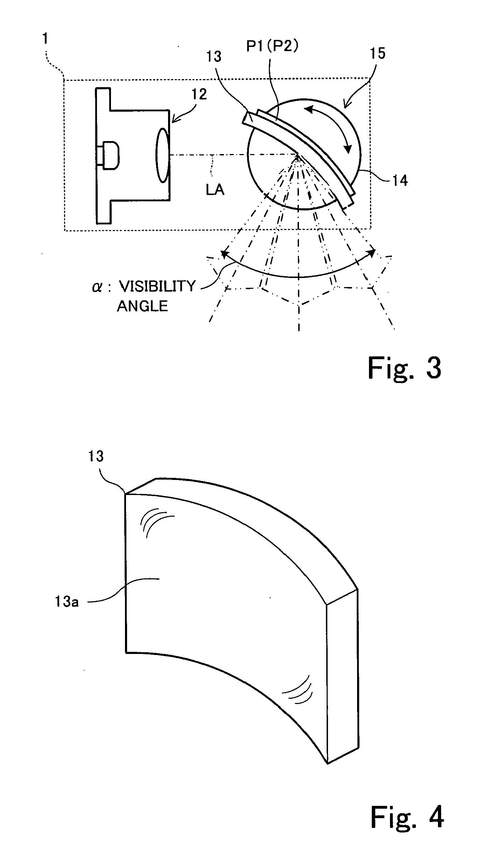

The piezoelectric elements P 1 and P2 are attached to the back surface of the light projecting mirror 13, as shown in Fig. 2. They are elongated pieces and are horizontally attached to an upper edge portion and a lower edge portion on the back surface of the light projecting mirror 13. They may be, for example, a bimorph structure, having two sheets of piezoelectric materials pasted to each other. If a differential voltage is applied to these sheets, a bending is generated because the directions of their elongation and shrinkage become opposite. If the force caused by this bending is applied to the back surface of the light projecting mirror 13, the mirror 13 is deformed (warps) inward as shown by arrows A and B. Fig. 4 shows the mirror 13 thus inwardly deformed.

If the bimorph structure of the mirror 13 is changed, the mirror 13 may be deformed outwardly. In what follows, however, the deformation will be assumed to take place inwardly. If the deformation is in the outward direction, the laser beam reflected by the reflecting surface continues to diverge. If the deformation is inward, the sectional area of the laser beam becomes smaller at the reflecting surface. Thus, if the beam is adjusted by means of the optical system 11 so as to have a specified angle of spread, the angle of spread of the beam reflected by the concave reflecting surface can be set to an appropriate degree.

The curvature of the reflecting surface caused by the deformation depends on the degree of deformations of the piezoelectric elements P1 and P2, or the magnitude of the applied voltage.

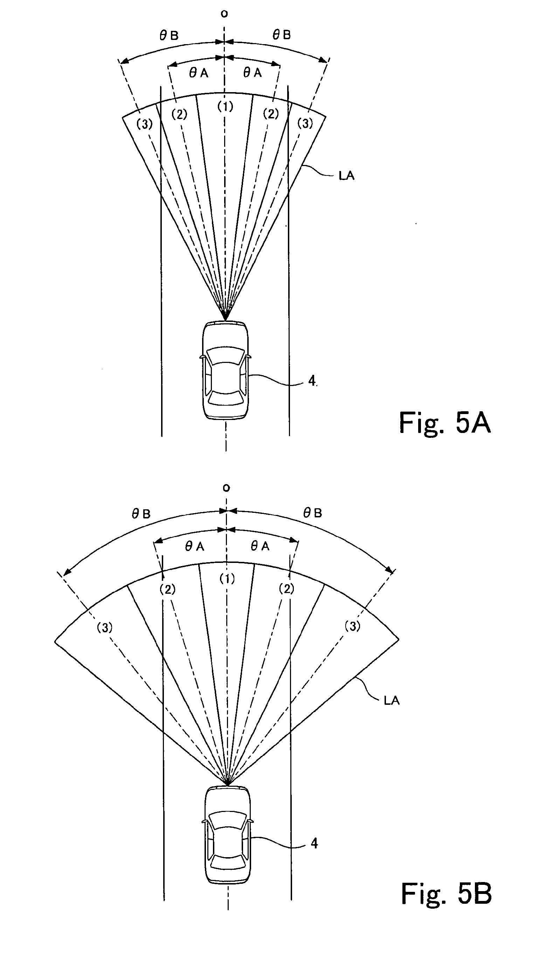

The piezoelectric elements P1 and P2 are driven (or a voltage is applied thereon) when the angle of oscillation of the light projecting mirror 13 is nearly at its maximum so as to make the curvature of its reflecting surface larger. Figs. 5A and 5B show the relationship between the own vehicle 4 and the laser beam LA projected from its laser beam projector. Let us assume that the field of vision in front of the own vehicle 4 is divided into Areas (1)-(3) which are scanned to the left and to the right by the laser beam LA.

Fig. 5A shows an example wherein the light projecting mirror 13 is not deformed and used as a flat surface in Areas (1) and (2) but is deformed to make its reflecting surface 13a concave in Areas (3) which correspond to the maximum angle of oscillation of the mirror 13. In both Figs. 5A and 5B, θA indicates the angle of oscillation from the center line O to the centers of Areas (2) and θB indicates that from the center line O to the centers of Areas (3).

Fig. 5B shows another example wherein the light projecting mirror 13 is gradually deformed to change the curvature of its reflecting surface 13a and to increase the angle of spread of the beam. The widths of Areas (2) and (3) are also gradually increased.

In the case of the example shown in Fig. 5A, the angle of spread of the beam in Areas (3) at the ends of the scan is simply increased. If the number of beams in each area is the same, overlapping of beams will take place in Areas (3). Overlapping may also occur with beams in neighboring Areas (2). In other words, there appear wasteful measurements due to the overlapping of beams (because two measurements will be made in the overlapped portions) and the accuracy will be adversely affected. However, the process becomes simpler in that the process of widening the areas becomes unnecessary. For this reason, the structure shown in Fig. 5A may be adopted when the accuracy of measurement need not be high.

In the case of the example shown in Fig. 5B, by contrast, the beams do not overlap although the angles of spread of the beams are increased. Thus, the process becomes somewhat more complicated but the speed of the processing becomes faster because there are no wasteful measurements. Since there is also the advantage of increased accuracy, the structure according to Fig. 5B should be adopted when an increased accuracy at the edges of the scan area is desired.

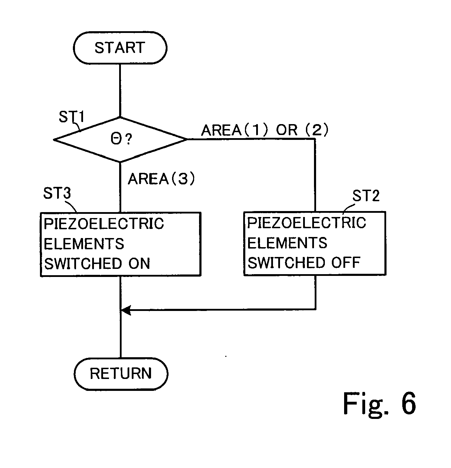

Fig. 6 is a flowchart showing the control of the scanning motion of the light projecting mirror 13. In this example, the control is such that the spread of the beam angle is increased when the angle of oscillation of the light projecting mirror 13 is in Areas (3).

In Step ST1 with reference to Fig. 6, the angle θ of oscillation is detected. If it is detected that the angle θ of oscillation is within the range of Area (1) or (2), the piezoelectric elements P 1 and P2 are not driven (or switched off) (Step ST2). As a result, the light projecting mirror 13 appears as shown in Fig. 1, being flat without deformation such that the laser beam LA reflected by the reflecting surface 13a has a small sectional area and that objects can be detected with high accuracy.

If it is detected in Step ST1 that the angle θ of oscillation of the light projecting mirror 13 is within the range of Area (3), the piezoelectric elements P1 and P2 are driven (or switched on) (Step ST3). As a result, the light projecting mirror 13 becomes deformed as shown in Fig. 3 such that the laser beam LA reflected by the reflecting surface 13a spreads, increasing its sectional area. The visibility angle α to the left and to the right increases such that some pedestrians not detectable if the light projecting mirror 13 remained flat may become detectable.

Since the light projecting mirror 13 is thus deformed according to the position in its scanning motion, time is not wasted for changing the curvature of its reflecting surface and the measurement process by the distance measuring device becomes continuous.

Although the invention was described above with reference to only one embodiment, it is not intended to limit the scope of the invention. Many modifications and variations are possible within the scope of the invention. Although the two piezoelectric elements P 1 and P2 were shown above as being attached horizontally to the back surface of the light projecting mirror 13 along the upper and lower edge portions, they may be attached vertically along the two side edges if the laser beam A is used to scan the front of the vehicle vertically.

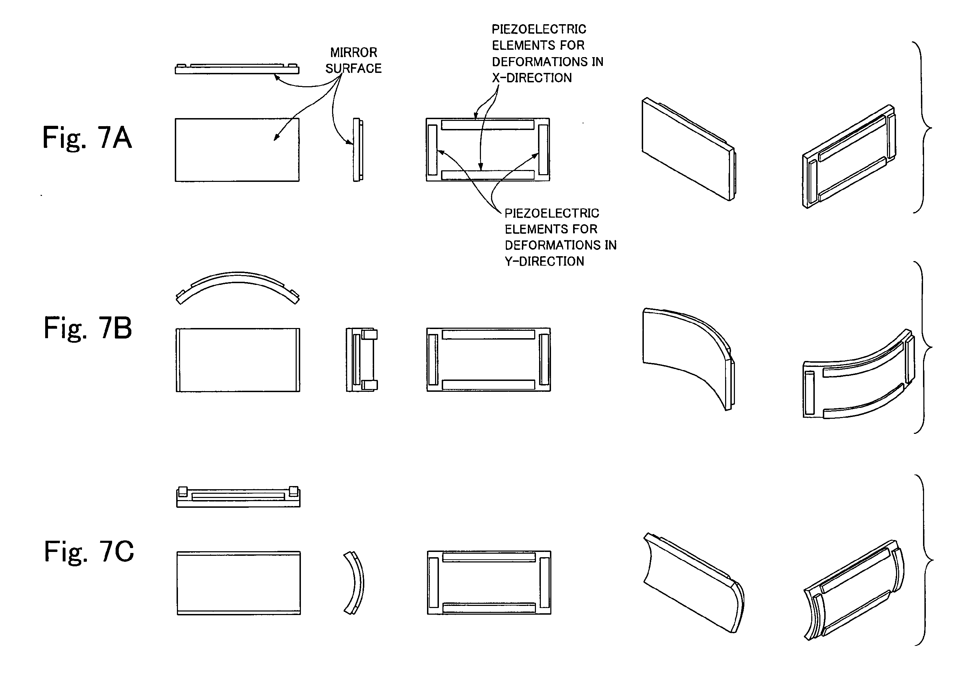

If a two-dimensional scan is carried out by oscillating the laser beam LA both horizontally and vertically, a total of four piezoelectric elements may be attached to the back surface of the light projecting mirror 13 on the upper, lower and side edge portions. Figs. 7A, 7B and 7C show the directions of deformation when four piezoelectric elements are thus attached both for deformations in the X-direction and in the Y-direction. Fig. 7A shows the situation where there is no deformation, Fig. 7B shows a situation where the deformation is in the left-right direction (X-direction), and Fig. 7C shows another situation where the deformation is in the up-down direction (Y-direction). In summary, the number of piezoelectric elements to be attached need not be two but may be any plural number equal to or greater than three. If the deformation is only in one direction such as the horizontal direction or the vertical direction, use may be made of only one piezoelectric element so long as the light projecting mirror 13 can be deformed uniformly.

If the voltage to be applied to the piezoelectric elements is varied continuously, the curvature of the light projecting mirror 13 can be varied also continuously. In summary, the curvature of the light projecting mirror 13 can be varied by varying the voltage applied to the piezoelectric elements.

## Claims

1. A laser beam projector comprising:
a laser light source that outputs a laser beam;
a light projecting mirror for reflecting said laser beam outputted from said laser light source;
a mirror driving device for oscillating said light projecting mirror and thereby scanning a specified area with said laser beam; and
at least one piezoelectric element attached to a back surface of said light projecting mirror.

2. The laser beam projector of claim 1 having a plurality of piezoelectric elements attached to said back surface of said light projecting mirror.

3. The laser beam projector of claim 1 further comprising actuating means for actuating said at least one piezoelectric element according to the angle of oscillation of said light projecting mirror.

4. The laser beam projector of claim 2 further comprising actuating means for actuating said piezoelectric elements according to the angle of oscillation of said light projecting mirror.

5. The laser beam projector of claim 3 wherein said actuating means actuates said at least one piezoelectric element when said angle of oscillation of said light projecting mirror is near the maximum angle of oscillation so as to increase the curvature of the reflecting surface of said light projecting mirror.

6. The laser beam projector of claim 4 wherein said actuating means actuates said piezoelectric elements when said angle of oscillation of said light projecting mirror is near the maximum angle of oscillation so as to increase the curvature of the reflecting surface of said light projecting mirror.

7. A distance measuring device comprising:
a laser beam projector that includes:
a laser light source that outputs a laser beam;
a light projecting mirror for reflecting said laser beam outputted from said laser light source;
a mirror driving device for oscillating said light projecting mirror and thereby scanning a specified area with said laser beam; and
at least one piezoelectric element attached to a back surface of said light projecting mirror;
a laser beam receiver for receiving reflected waves of said laser beam from an object; and
a control unit for measuring the distance to said object based on the difference between the time of projecting said laser beam from said laser beam projector and the time of receiving said reflected waves by said laser beam receiver and the direction of said object from the direction of the projected laser beam.

8. The distance measuring device of claim 7 wherein said laser beam projector has a plurality of piezoelectric elements attached to said back surface of said light projecting mirror.

9. The distance measuring device of claim 7 wherein said laser beam projector further comprises actuating means for actuating said at least one piezoelectric element according to the angle of oscillation of said light projecting mirror.

10. The distance measuring device of claim 8 wherein said laser beam projector further comprises actuating means for actuating said piezoelectric elements according to the angle of oscillation of said light projecting mirror.

11. The distance measuring device of claim 9 wherein said actuating means actuates said at least one piezoelectric element when said angle of oscillation of said light projecting mirror is near the maximum angle of oscillation so as to increase the curvature of the reflecting surface of said light projecting mirror.

12. The distance measuring device of claim 10 wherein said actuating means actuates said piezoelectric elements when said angle of oscillation of said light projecting mirror is near the maximum angle of oscillation so as to increase the curvature of the reflecting surface of said light projecting mirror.
